(19) Europäisches Patentamt European Patent Office Office européen des brevets

(11) **EP 4 448 960 B1**

(12) **EUROPEAN PATENT SPECIFICATION**

(45) Date of publication and mention
of the grant of the patent:
**01.04.2026 Bulletin 2026/14**

(21) Application number: **22844208.3**

(22) Date of filing: **27.12.2022**

(51) International Patent Classification (IPC):
**F03D 17/00** *(2016.01)* **F03D 80/60** *(2016.01)*

(52) Cooperative Patent Classification (CPC):
**F03D 80/60; F03D 17/013; F03D 17/018;**
F03D 9/25; F05B 2260/64; F05B 2270/325;
Y02E 10/72

(86) International application number:
**PCT/EP2022/087888**

(87) International publication number:
**WO 2023/156053 (24.08.2023 Gazette 2023/34)**

(54) **METHOD OF CONTROLLING A WIND TURBINE**

VERFAHREN ZUR STEUERUNG EINER WINDTURBINE

PROCÉDÉ DE COMMANDE D'ÉOLIENNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.02.2022 EP 22157279**

(43) Date of publication of application:
**23.10.2024 Bulletin 2024/43**

(73) Proprietor: **Siemens Gamesa Renewable Energy
A/S**
**7330 Brande (DK)**

(72) Inventors:
• **HAWKINS, Samuel**
**7100 Vejle (DK)**
• **KROGH, Christian Joachim**
**8000 Aarhus (DK)**

(74) Representative: **SGRE-Association
Siemens Energy Global GmbH & Co. KG
SE I IM P Intellectual Property
Siemenspromenade 9
91058 Erlangen (DE)**

(56) References cited:
KR-B1- 101 724 895       US-A1- 2004 178 638
US-A1- 2013 270 825

**Description**

Background

Hygroscopic material may be used in various electrical components of a wind turbine, for example in a winding insulation system of the generator armature and/or field; in a frequency converter; in an inductive filter; in a printed circuit board; in a winding insulation system of a motor armature and/or field, in insulating fluid of a liquid-filled transformer; etc.

A winding insulation system as implemented in a wind turbine generator serves to electrically insulate the closely-packed windings from each other. The material composition of the insulation is chosen on its ability to withstand the electrical stresses, thermal stresses and mechanical stresses that may arise during operation of the generator. A suitable material composition will have a high breakdown voltage and a low leakage current, will resist deformation from high temperatures, and will retain its mechanical strength. However, the established material compositions that can be used in large generators are generally hygroscopic to some extent, i.e. the insulating material will absorb moisture from the air under certain conditions. As the winding insulation absorbs moisture, its internal resistance can deteriorate, posing the risk of short-circuit between adjacent windings. This can result in serious damage to the generator, leaving the wind turbine inoperable until it can be repaired. This downtime is associated with a significant loss of revenue for the wind turbine operator.

In a wind turbine, the generator armature can be directly or indirectly exposed to air of the ambient environment. A wind turbine will generally be equipped with a climate control system which can maintain a desired temperature and relative humidity in each of several interior spaces (e.g. inside the generator, inside the nacelle, in the hub interior, in a tower interior, etc.). As long as the wind turbine is operational, the climate control systems are supplied with power and the interior climate can be maintained as desired. When a wind turbine is not operational and is disconnected from the grid, auxiliary devices such as the climate control system must be powered by a backup power supply. However, in the absence of a backup power supply, the climate control system cannot function, leading to an increase in relative humidity in the nacelle interior and therefore also in the generator. The quantity of moisture absorbed by the winding insulation material is directly related to the length of time during which the climate control system is not operational. Therefore, it is important that the generator is restarted only when there is no risk of damage. However, direct measurement of the winding resistance is not practicable for various reasons. The prior art methods therefore rely on various assumptions regarding the state of the climate to which the temperature- and moisture-critical components are exposed. In one approach, after return of power to the climate control system, a set duration of time is allowed to elapse during which the air temperature is raised and the air is dried, so that the relative humidity is reduced. This predetermined "dry-out time" is based on experience, and allows the wind turbine operator to assume that the moisture content in any temperature- and moisture-critical component is sufficiently low as to allow the wind turbine to restart safely. To cover all possible situations, the predetermined duration of time may be considerably longer than is actually required, for example up to 72 hours after restoration of grid power. For example, the dry-out time may conclude several hours after the moisture content has returned to a safe level. The prior art approach of relying on a predetermined dry-out duration can therefore lead to excessively long downtime and unnecessary loss of revenue.

Document KR101724895 B1 is a prior art example of determining humidity in a wind turbine.

It is therefore an object of the invention to provide a way of ensuring that a wind turbine can start safely, while avoiding the problems described above.

This object is achieved by the claimed method of controlling a wind turbine and by the claimed wind turbine.

Description

According to the invention, the method of controlling a wind turbine comprises steps of recording temperature measurements sensed in an enclosed space of the wind turbine; recording humidity measurements sensed in the enclosed space; estimating, on the basis of the measurements, the progression of electrical resistance of a hygroscopic material deployed in an electrical machine of the wind turbine; and evaluating the need for a dry-out procedure on the basis of the estimated resistance.

The inventive method advantageously provides a way of determining - with a favourable degree of accuracy - whether a dry-out procedure is required after an off-grid state and, if so, the required duration of such a dry-out procedure. The inventive method therefore minimizes the downtime following restoration of grid power. Instead of waiting for a predetermined dry-out duration to elapse as is known from the prior art methods, the invention allows the wind turbine to be restarted after only a minimum delay without risk of damage.

The method can be performed without the need to provide any additional hardware, and can deploy sensors already used by the wind turbine. To implement the inventive method, very little information must be collected, namely a series of measurements of relative humidity and a number of parameters which can be established in advance.

According to the invention, the wind turbine comprises at least: an electrical component in which a quantity of hygroscopic material is deployed; a sensor arrangement configured to measure temperature and humidity in an enclosed space of the wind turbine; a data analysis module configured to estimate the resistance of the hygroscopic material on the basis of the measurements provided by the sensor arrangement; and a dry-out evaluation module configured to evaluate the need for a dry-out procedure on the basis of the estimated resistance.

An advantage of the inventive wind turbine is that, following an off-grid mode, it can be started after only a minimum duration during which a dry-out procedure may be performed as required. This compares favourably to prior art methods of wind turbine control, which assume that a predetermined dry-out time is required and which delay restart until completion of the dry-out procedure regardless of whether or not a dry-out procedure was necessary.

The data analysis module and dry-out evaluation module can be completely or partially realised as software modules running on a processor of a wind turbine controller (WTC). A realisation largely in the form of software modules can have the advantage that applications already installed on an existing system can be updated, with relatively little effort, to execute the steps of the inventive method.

Particularly advantageous embodiments and features of the invention are given by the dependent claims, as revealed in the following description. Features of different claim categories may be combined as appropriate to give further embodiments not described herein.

As mentioned above, hygroscopic material may be used in various electrical components of a wind turbine. In the context of the invention, any temperature-sensitive and/or humidity-sensitive component may be regarded as a "critical component" if wind turbine startup must be deferred until that component fulfils dryout criteria. In the following, without restricting the invention in any way, it may be assumed that the electrical component is the wind turbine generator, but it shall be understood that the inventive method is equally applicable to any of the electrical components mentioned above.

The wind turbine generator deploys hygroscopic material in the electrical insulation enclosing the generator armature windings. As explained above, the purpose of this electrical insulation is to prevent short-circuits between adjacent windings, since it is necessary to pack the windings very close together. In the following, it may be assumed that the winding insulation deployed in the generator comprises a hygroscopic material that can absorb moisture from the surrounding environment under certain conditions, thereby undergoing a decrease in electrical resistance; and which can release moisture to the surrounding environment under other conditions, thereby undergoing an increase in electrical resistance. Such hygroscopic material can comprise any of an epoxy resin, a polyamide resin, a polyimide resin, a polyurethane resin, depending on the generator armature design.

In the following, without restricting the invention in any way, it may be assumed that the method estimates the electrical resistance in the hygroscopic material of the winding insulation. The terms "winding insulation", "insulation material" and "hygroscopic material" may be used interchangeably. Equally, the expressions "winding insulation resistance" and "insulation resistance" may be used interchangeably.

The sensor arrangement can comprise any number of temperature sensors arranged at suitable locations in the enclosed space of the wind turbine, for example one or more temperature sensors arranged inside the housing of a critical component.

The sensor arrangement can comprise any number of humidity sensors arranged at suitable locations in such an enclosed space, for example one or more humidity sensors arranged in the interior of the nacelle. The sensor arrangement can comprise any number of temperature sensors arranged to measure the surface temperature of any temperature-sensitive component.

The method according to the invention computes the resistance of the winding insulation on the basis of relative humidity, which is dependent on both temperature and absolute humidity. In a preferred embodiment of the invention, therefore, the relative humidity in the enclosed space is directly measured by a device such as a resistive hygrometer, which senses both temperature and humidity and which reports a value of relative humidity.

In a particularly preferred embodiment of the invention, the wind turbine comprises a data-logging means which is configured to record measurements provided by any sensor of the sensor arrangement. The measurements can be recorded at discrete intervals, for example, and are preferably recorded at regular intervals. A data-logger can be a battery-powered device equipped with components such as an internal memory, an interface for communication with the wind turbine controller, etc. Such a data-logger can be connected to record measurements as soon as the sensor arrangement is set up to monitor conditions in the wind turbine's enclosed space. For example, in an early assembly stage being carried out in a manufacturing facility, one or more sensors can be mounted in the nacelle interior and connected to a data-logger also arranged in the nacelle interior.

Once the data-logger of a wind turbine is activated for the first time, it records relative climate measurements during any subsequent stage: i.e. during the remainder of the assembly stage; during all installation stages; during the commissioning stage; and during all subsequent on-grid and off-grid modes of operation of that wind turbine. It may be assumed that power consumption of the data-logger is very low and that it can be powered for a long time from a suitable battery, preferably a rechargeable battery that is recharged from an auxiliary power supply, for example.

In a preferred embodiment of the invention, the sensor arrangement is configured to measure relative humidity inside the generator housing, the air temperature near the windings, and the surface temperature of the windings. From the air temperature and relative humidity measurements, the data analysis module can determine the dew point of the air near the windings. When the winding surface temperature is at or below the dew point, conditions are favourable for water to condense on the surface of the winding insulation. In this state, the absorption of moisture into the hygroscopic material occurs more rapidly, and insulation winding resistance also decreases more rapidly.

In a preferred embodiment of the invention, the inventive method can commence during an early assembly stage of the wind turbine, and can continue throughout the lifetime of the wind turbine. In a preferred embodiment of the invention, the method comprises initial steps of activating a data-logger to commence recording relative humidity and temperature readings, and recording an initial value of electrical resistance of the hygroscopic material of the generator winding insulation (this information can be supplied by the manufacturer of the winding insulation, for example).

These initial steps are performed upon completion of assembly of the generator unit, i.e. in a factory setting. At this point, it is known that the generator is "dry", and a dry-out flag of the wind turbine controller can be cleared (when cleared, this flag indicates that dry-out is not necessary; when set, this flag indicates that dry-out must be performed prior to startup). It shall be understood that these steps can be performed prior to the later installation and commissioning stages of the wind turbine. During an extended period of time between assembling the generator unit and commissioning the wind turbine, the data-logger can record relative humidity measurements and the data analysis module can continually calculate estimations of the electrical resistance of the insulation material about the generator windings. With this information, a dry-out evaluation module can determine whether or not the wind turbine can be started immediately after completing the installation. This compares favourably to prior art approach, in which startup of the wind turbine is preceded by a mandatory dry-out procedure during which the wind turbine cannot generate revenue.

Subsequently, during any mode of operation of the wind turbine, the resistance of the hygroscopic material can be estimated under consideration of a predetermined relative humidity threshold value for the hygroscopic material, and on the basis of a previously established relationship between relative humidity and insulating material resistance. Any change in electrical resistance of the hygroscopic material can be estimated from the relationship:

$$\Delta RW_t = (k_1 - \phi_t) \cdot \Delta t \cdot k_2 \qquad (1)$$

where $\Delta RW_t$ is the incremental change in electrical resistance of the hygroscopic material (the partial increase or decrease in insulation resistance at time t); $k_1$ is the relative humidity threshold for that hygroscopic material, i.e. the level of relative humidity above which the electrical resistance can be expected to decrease; $\phi_t$ is the relative humidity measured at time t; $\Delta t$ is the length of time between consecutive samples; $k_2$ is a previously established relationship or conversion factor between relative humidity and electrical resistance of the hygroscopic material.

The progression of estimated resistance can be evaluated to detect an upward or downward trend in the electrical resistance of the hygroscopic material.

The net or accumulated winding insulation resistance R at any given time t can be calculated from

$$RW_t = \sum_{i=0}^{t} \Delta RW_i \qquad (2)$$

An advantage of the inventive method is that the computations based on the above equations are quite straightforward. Of course, if appropriate, the electrical resistance could be estimated using more elaborate relationships that take further parameters into consideration, for example a surface temperature of the winding insulation, air pressure inside the nacelle, or any other parameter that influences the moisture absorbed by or released from the hygroscopic material.

For example, at relative humidity levels greater than 50%, the dew point temperature $T_{dp}$ of the air can be estimated from

$$T_{dp} = T_{air} \left( \frac{100 - RH}{5} \right) \qquad (3)$$

where $T_{air}$ is the air temperature, and RH is the relative humidity of the air. To account for the added effect of surface condensation, equation (1) can be modified as follows:

$$\Delta RW_t = (k_1 - \phi_t) \cdot \Delta t \cdot k_2 + \cdot \Delta t \cdot k_3 \qquad (4)$$

where $k_3$ is a rate of change of winding resistance in the presence of liquid water. If it can be established that the winding surface temperature is below the dew point $T_{dp}$ from equation (3), the change in winding resistance $\Delta RW_t$ is computed using equation (4). Otherwise, it may be assumed that there is no condensation on the winding insulation material, and the change in winding resistance $\Delta RW_t$ is computed using equation (1). As explained above, an electrical machine such as a wind turbine generator should only be started after an off-grid mode if it is safe to do so, i.e. if the machine can be re-started without risk of short-circuit due to a temporary loss of function in the winding insulation.

With the inventive method, the wind turbine can be restarted essentially immediately after commencing an on-grid mode, if the electrical resistance of the hygroscopic material has remained above its minimum threshold value. In this way, the wind turbine can immediately restart the generator and can commence exporting power to the grid.

After an extended off-grid mode, the electrical resistance of the hygroscopic material may have decreased to a level below its minimum threshold value. Should this be the case, the wind turbine controller will set the dry-out flag (e.g. to logic "1") to initiate a dry-out procedure. During the dry-out procedure, auxiliary units such as a ventilation unit, a dehumidifier, a heater etc., are operated to increase the temperature inside the nacelle and to reduce the relative humidity.

During the dry-out procedure, the inventive method continues to collect sensed measurements and to compute estimations of insulation resistance. As the air in the nacelle interior is warmed and the relative humidity decreases, the moisture absorbed by the hygroscopic material will evaporate, and the electrical resistance of the hygroscopic material increases again. Ultimately, the electrical resistance will reach a predetermined minimum level, above which it is safe to switch on the generator. With the inventive method, the wind turbine can be restarted as soon as it can be established that the resistance of the hygroscopic material has risen to a level at or above the minimum threshold value. At this point, the wind turbine controller can again clear the dry-out flag. This can indicate that the dry-out procedure has concluded and that the generator can be switched on to restart the wind turbine. Generally, a dry-out procedure is only required after a prolonged off-grid state in which the air-conditioning units of the wind turbine are without power and the inventive method provides a way of ensuring that the duration of such a dry-out procedure is kept to favourable minimum. The inventive method may also be deployed to determine whether a dryout is needed in the event of a fault in the climate control system (e.g. the dehumidifier breaks down). In such a situation, the inventive method could be deployed to determine whether the wind turbine can continue operation or whether shut-down is appropriate.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows a wind turbine equipped with an embodiment of the inventive monitoring arrangement;

Figure 2 is block diagram to illustrate the inventive method;

Figure 3 is a flowchart to illustrate steps of the inventive method;

Figures 4 and 5 illustrate exemplary situations arising during the inventive method;

Figures 6 and 7 illustrate situations corresponding to Figures 4 and 5 respectively;

Figure 8 illustrates a prior art approach to resuming operation after an off-grid mode;

Figure 9 shows a set of wind turbine generator windings.

In the diagrams, like numbers refer to like objects throughout. Objects in the diagrams are not necessarily drawn to scale.

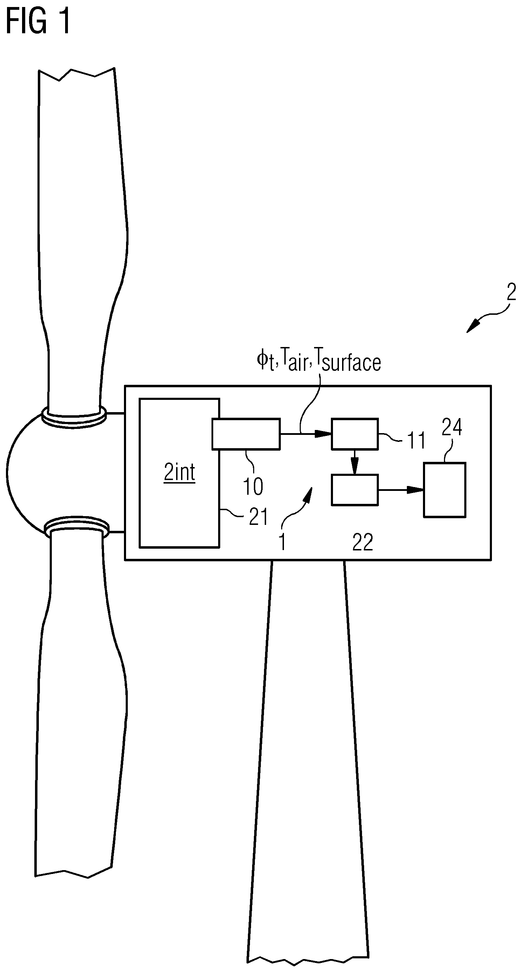

Figure 1 shows a wind turbine 2 equipped with an embodiment of the inventive monitoring arrangement 1. The diagram only indicates the relevant components of the wind turbine 2, in this case the generator 21, the monitoring arrangement 1, and the wind turbine controller 22. The generator windings are wrapped in an insulating material which is hygroscopic to some extent.

In this exemplary embodiment, the monitoring arrangement 1 comprises a sensor arrangement 10 with sensors that can measure relative humidity and temperature. The sensor arrangement 10 is configured to measure the relative humidity $\phi_t$ and the air temperature $T_{air}$ in an enclosed space $2_{int}$ of the wind turbine 2. The sensor arrangement 10 can also include a means of measuring the surface temperature $T_{surface}$ of the generator winding insulation. The monitoring arrangement 1 also comprises a data analysis module (realised for example as part of a data-logging means 11) that computes an estimate of the resistance of the hygroscopic material, using measurements provided by the sensor arrangement. The monitoring arrangement 1 also comprises a dry-out evaluation module (realised for example as part of a wind turbine controller 22) that evaluates the need for a dry-out procedure from the estimated resistance.

During an off-grid state, a climate-control arrangement of the wind turbine may be without power, for example if the auxiliaries of the wind turbine can only be powered by the grid, or if a backup power supply is depleted. As a result, the temperature of the air inside the nacelle will drop, and its relative humidity will increase. This applies also to the air inside the generator, and the hygroscopic material of the armature winding insulation will absorb moisture. Therefore, after grid power is restored, the procedure of re-starting the wind turbine 2 cannot be done until it is ascertained that the winding insulation is sufficiently dry.

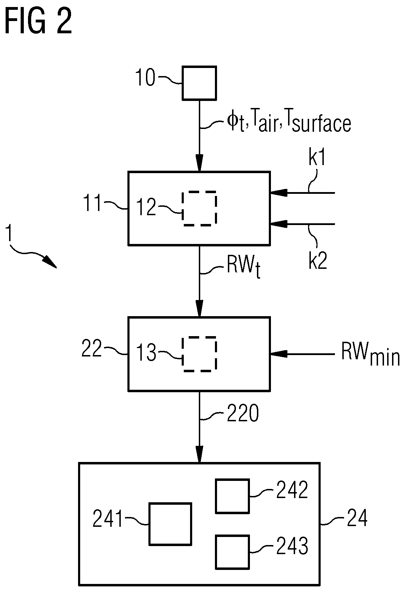

The data analysis module 12 can be realised in a data-logger 11 as indicated in Figure 2, which shows a simplified block diagram of the relevant units and modules that collectively implement the inventive method. The data analysis module 12 computes an estimate RWt of the resistance of the hygroscopic material, for example using equations (1) and (2) described above. To this end, a predetermined humidity threshold value k1 for that hygroscopic material can be input to the data-logger 11 during an assembly stage of the wind turbine 2. Similarly, a previously established relationship k2 between relative humidity and electrical resistance can be input to the data-logger 11 during an assembly stage of the wind turbine 2. The data analysis module continually updates its estimate of electrical resistance $RW_t$ and forwards this to the dry-out evaluation module 13, which in this exemplary embodiment is realised in the wind turbine controller 22. The dry-out evaluation module 13 compares the estimated electrical resistance RWt to a minimum threshold value $RW_{min}$, which may be stored in a memory of the wind turbine controller 22 during an assembly stage of the wind turbine 2.

The computations performed by the monitoring arrangement 1 become relevant especially when grid power is restored after an off-grid mode of operation: as long as the estimate of electrical resistance exceeds this minimum threshold value $RW_{min}$, it would be safe to restart the generator. However, when the estimated electrical resistance is below this minimum threshold value $RW_{min}$, it is not safe to restart the generator.

In this exemplary embodiment, the dry-out evaluation module 13 can set the dry-out flag if the electrical resistance is estimated to be below the minimum threshold value $RW_{min}$, or clear the dry-out flag if the electrical resistance is estimated to be at or above the minimum threshold value $RW_{min}$.

If the electrical resistance was estimated to be at or above the minimum threshold value $RW_{min}$, the wind turbine controller 22 can initiate a start-up procedure essentially immediately after reconnection to the grid.

If the electrical resistance was estimated to be below the minimum threshold value $RW_{min}$ and the dry-out flag is set, the wind turbine controller 22 can issue control signals 220 to a climate-control arrangement 24 (comprising heater(s) 241, fan(s) 242, dehumidifier(s) 243 etc.) to achieve a desirable environment in the nacelle interior.

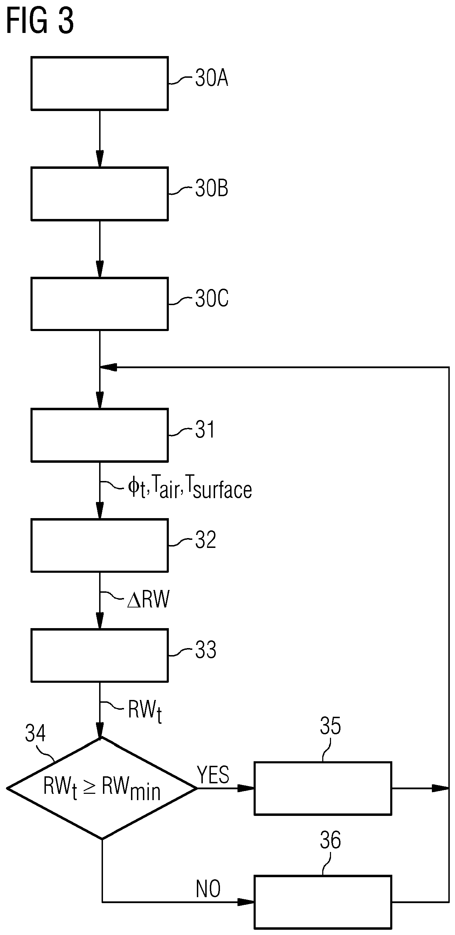

Figure 3 is a flowchart to illustrate steps in an exemplary embodiment of the inventive method. During initial stages in the manufacture of a wind turbine, the generator is assembled in step 30A, a data-logger and sensor arrangement is installed and activated in step 30B, and relevant parameters (e.g. initial value of winding resistance, threshold levels etc.) are stored in step 30C.

In a subsequent step 31, measurements such as relative humidity $\phi_t$, air temperature $T_{air}$, surface temperature $T_{surface}$ are collected and input to the data-logger. Any change ΔRW in electrical resistance of the winding material is computed in step 32. The net electrical resistance RWt at the present time is computed in step 33 by applying equations (1) to (4) as appropriate. In step 34, this electrical resistance $RW_t$ is compared to the minimum acceptable value $RW_{min}$. If the electrical resistance $RW_t$ is equal to or exceeds the minimum acceptable value $RW_{min}$, the dry-out flag is cleared in step 35, indicating that a dry-out procedure is not necessary and the generator can be safely started from an off-state. If the electrical resistance RWt is below the minimum acceptable value $RW_{min}$, the dry-out flag is set in step 36 indicating that a dry-out procedure is necessary before starting the generator from an off-state.

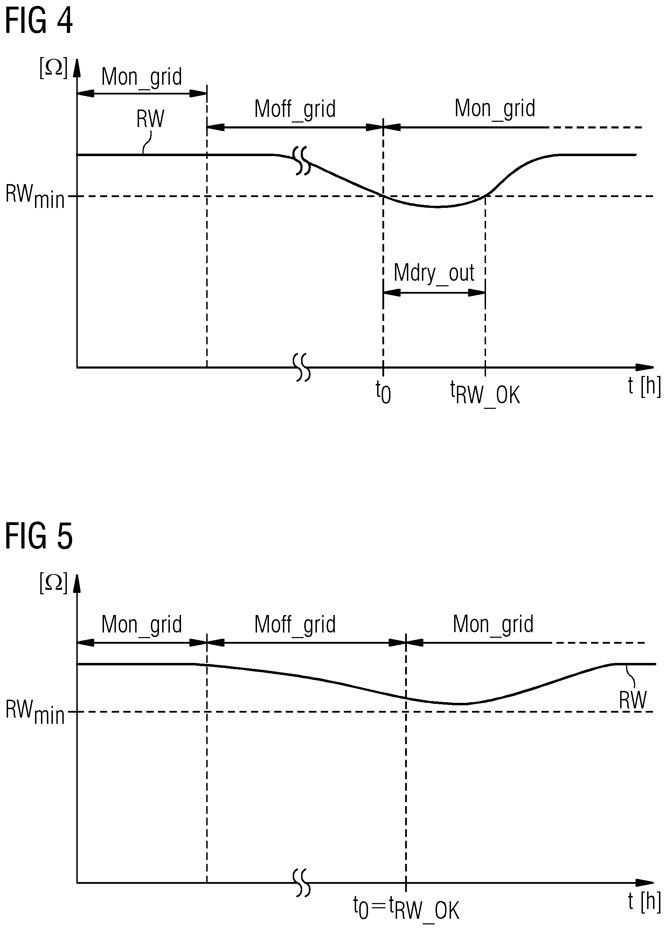

The possible outcomes of step 34 are illustrated in Figures 4 and 5. In Figure 4, the progression of electrical resistance RW is shown against time (in practice, the progression may be a series of individual winding resistance estimates RWt). A mode of normal operation $M_{ongrid}$ is followed by an offgrid mode $M_{offgrid}$, which can persist for any length of time. In the absence of power, the temperature in the nacelle decreases and the relative humidity increases. As a result, the electrical resistance RW of the generator winding insulation can deteriorate as the hygroscopic material absorbs moisture.

At time $t_0$, grid power is restored again for a subsequent on-grid mode $M_{ongrid}$. The modules of the monitoring arrangement are continually evaluating the relative humidity measurements and computing an up-to-date estimate of electrical resistance RW.

In Figure 4, at time $t_0$, the monitoring arrangement concludes that the electrical resistance RW of the generator winding insulation is too low to permit the generator to be re-started, and the wind turbine controller initiates a dry-out procedure. The hygroscopic material of the winding insulation can release moisture to the surrounding environment, and its resistance increases again. At time $t_{RW\_OK}$, the monitoring arrangement concludes that the electrical resistance RW of the generator winding insulation has reached the minimum level $RW_{min}$ so that the generator can be re-started.

In Figure 5, at time $t_0$, the monitoring arrangement concludes that the electrical resistance RW of the generator winding insulation is already at a level that permits the generator to be re-started safely without any dry-out procedure.

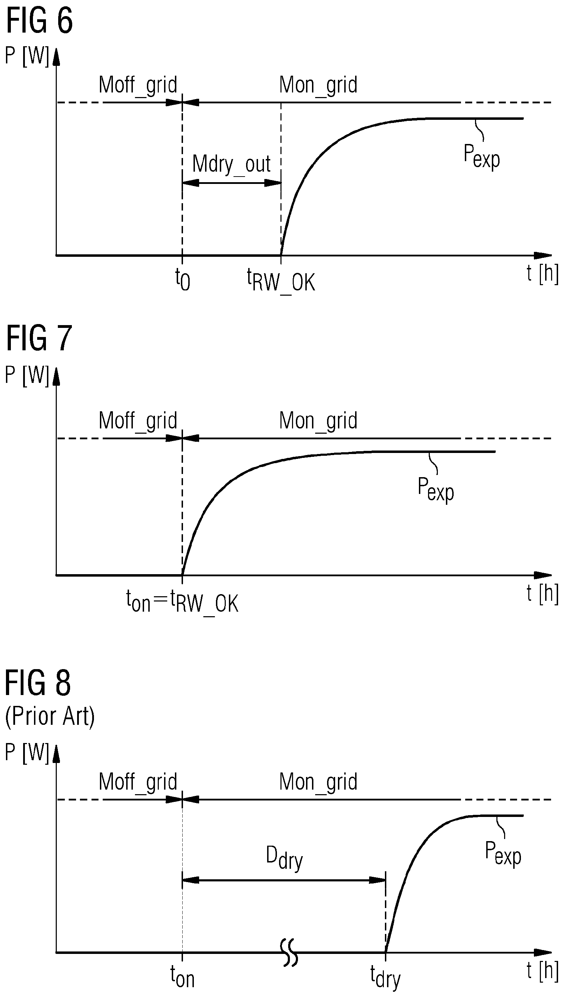

These decisions determine the point in time at which the generator can commence exporting power $P_{exp}$, as shown in Figures 6 and 7. Figure 6 illustrates a situation corresponding to Figure 4, and shows how the wind turbine controller waits until the electrical resistance RW has increased to a satisfactory level before re-starting the generator at time $t_{RW\_OK}$. Figure 7 illustrates a situation corresponding to Figure 5, and shows how the wind turbine controller re-starts the generator at time $t_0$, since the electrical resistance RW of the generator winding insulation is already at or above the minimum level, and the generator can be safely re-started to export power $P_{exp}$ without any dry-out procedure.

Figure 8 illustrates a prior art approach to resuming operation after an off-grid mode. Here, following an off-grid mode $M_{offgrid}$ of indeterminate length, restoration of grid power occurs at time $t_0$, and power is again available to the auxiliary components of a wind turbine. A dry-out procedure is then initiated and persists until a predetermined dry-out duration $D_{dry}$ has elapsed at time $t_{dry}$. This predetermined dry-out duration $D_{dry}$ is generally a conservative estimate based on empirical data, and can greatly exceed the actual length of time required to complete dry-out if environmental conditions in the nacelle remained favourable. Furthermore, depending on the conditions leading up to and during the off-grid mode, there may in fact be no need to perform a dry-out procedure, but this will nevertheless be initiated at time $t_0$ and allowed to complete at time $t_{dry}$. As a result, restart of a prior art wind turbine following an off-grid mode may be delayed without need, resulting in unnecessary sacrifice of revenue, since the wind turbine can only commence exporting power $P_{exp}$ at time $t_{dry}$.

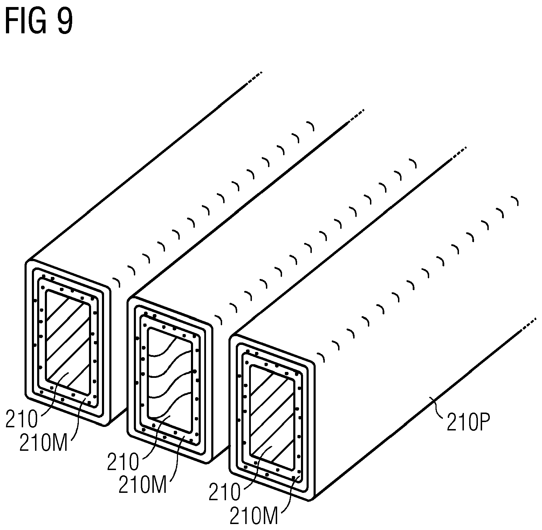

Figure 9 shows a set of three windings 210 of the type that might be used in a wind turbine generator 21. Each winding 210 is wrapped in an insulating package 210P comprising layers of dielectric material 210M. In an electrical machine such as a large wind turbine generator 21, the insulating package 210P must fulfil several requirements, and the necessary materials 210M are generally hygroscopic. As explained in Figure 1 above, the sensor arrangement 10 can also comprise one or more temperature probes placed to measure the surface temperature $T_{surface}$ of the generator winding insulation, so that estimation of the winding insulation resistance can be very accurately established by also taking into the consideration the dew point temperature.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

**Claims**

1. A method of controlling a wind turbine (2), which method comprises steps of

   - measuring one or more climate parameters ($\phi_t$, $T_{air}$, $T_{surface}$) in an interior ($2_{int}$) of the wind turbine (2);
   - estimating, on the basis of the climate parameters ($\phi_t$, $T_{air}$, $T_{surface}$), the electrical resistance (RWt) of an insulating material (210M) deployed in an electrical component (21) of the wind turbine (2);
   - evaluating the need for a dry-out procedure on the basis of the estimated resistance (RWt).

2. A method according to the preceding claim, wherein the step of estimating the electrical resistance (RWt) of the insulating material (210M) is based on a predetermined humidity threshold value ($k_1$) for that material (210M).

3. A method according to any of the preceding claims, wherein the electrical resistance (RWt) of the insulating material (210M) is estimated on the basis of a previously established relationship between a climate parameter ($\phi_t$, $T_{air}$, $T_{surface}$) and electrical resistance of that material (210M).

4. A method according to any of the preceding claims, comprising a step of evaluating the progression of the estimated electrical resistance (RWt) to detect an increase or decrease in electrical resistance.

5. A method according to any of the preceding claims, comprising a step of initiating a dry-out procedure when the estimated electrical resistance (RW) of the insulating material (210M) no longer exceeds a minimum threshold value ($RW_{min}$).

6. A method according to any of the preceding claims, comprising a step of concluding the dry-out procedure when the estimated electrical resistance (RWt) of the insulating material (210M) is at least as great as the minimum threshold value ($RW_{min}$).

7. A method according to any of the preceding claims, comprising initial steps of

   - activating a data-logging means (11) adapted to record climate parameters ($\phi_t$, $T_{air}$, $T_{surface}$); and
   - recording an initial value of electrical resistance ($RW_0$) of the insulating material (210M) deployed in the electrical machine (21);

which initial steps are performed upon completion of assembly of the electrical machine (21).

8.  A method according to the preceding claim, comprising a further initial step of clearing a dry-out flag.

9.  A method according to any of the preceding claims, wherein the climate parameters ($\phi_t$, $T_{air}$, $T_{surface}$) are evaluated during any subsequent mode of operation ($M_{ongrid}$, $M_{offgrid}$, $M_{dryout}$) of the wind turbine (2).

10. A method according to any of the preceding claims, wherein a dry-out procedure is performed during an on-grid mode of operation ($M_{ongrid}$).

11. A method according to any of the preceding claims, wherein the measured climate parameters comprise relative humidity ($\phi_t$) and/or air temperature ($T_{air}$) and/or surface temperature.

12. A wind turbine (2) comprising an electrical machine (21) in which a quantity of insulating material (210M) is deployed; and a monitoring arrangement (1) configured to perform the method according to any of claims 1 to 11, the monitoring arrangement (1) comprising

    - a sensor arrangement (10) configured to measure one or more climate parameters ($\phi_t$, $T_{air}$, $T_{surface}$) in an interior ($2_{int}$) of the wind turbine (2);
    - a data analysis module (12) configured to estimate the electrical resistance (RWt) of the insulating material (210M) on the basis of climate parameters ($\phi_t$, $T_{air}$, $T_{surface}$) measured by the sensor arrangement (10); and
    - a dry-out evaluation module (13) configured to evaluate the need for a dry-out procedure on the basis of the estimated resistance (RWt).

13. A wind turbine according to the preceding claim, wherein the electrical machine (21) is the generator of the wind turbine (2), and the insulating material (210M) is deployed about the generator windings (210W).

14. A wind turbine according to claim 12 or claim 13, comprising a data-logging means (11) adapted to record and evaluate the climate parameters ($\phi_t$, $T_{air}$, $T_{surface}$) measured by the sensor arrangement (10).

15. A computer program product comprising a computer program that is directly loadable into a memory of a monitoring arrangement (1) of a wind turbine (2) according to any of claims 12 to 14, and which comprises program elements for performing steps of the method according to any of claims 1 to 11 when the computer program is executed by the monitoring arrangement (1).


**Patentansprüche**

1.  Verfahren zum Steuern einer Windturbine (2), wobei das Verfahren folgende Schritte umfasst

    - Messen eines oder mehrerer Klimaparameter ($\varphi_t$, $T_{air}$, $T_{surface}$) in einem Innenraum ($2_{int}$) der Windturbine (2);
    - Schätzen, auf der Grundlage der Klimaparameter ($\varphi_t$, $T_{air}$, $T_{surface}$), des elektrischen Widerstands (RWt) eines Isoliermaterials (210M), das in einer elektrischen Komponente (21) der Windturbine (2) eingesetzt ist;
    - Bewerten der Notwendigkeit einer Austrocknungsprozedur auf der Grundlage des geschätzten Widerstands (RWt).

2.  Verfahren nach dem vorhergehenden Anspruch, wobei der Schritt des Schätzens des elektrischen Widerstands (RWt) des Isoliermaterials (210M) auf einem vorbestimmten Feuchtigkeitsschwellenwert ($k_1$) für dieses Material (210M) basiert.

3.  Verfahren nach einem der vorhergehenden Ansprüche, wobei der elektrische Widerstand (RWt) des Isoliermaterials (210M) auf der Grundlage einer zuvor erstellten Beziehung zwischen einem Klimaparameter ($\varphi_t$, $T_{air}$, $T_{surface}$) und dem elektrischen Widerstand dieses Materials (210M) geschätzt wird.

4.  Verfahren nach einem der vorhergehenden Ansprüche, umfassend einen Schritt des Bewertens des Verlaufs des geschätzten elektrischen Widerstands (RWt), um eine Erhöhung oder Verringerung des elektrischen Widerstands zu erkennen.

**5.** Verfahren nach einem der vorhergehenden Ansprüche, umfassend einen Schritt des Initiierens einer Austrocknungsprozedur, wenn der geschätzte elektrische Widerstand (RW) des Isoliermaterials (210M) einen Mindestschwellenwert ($RW_{min}$) nicht länger überschreitet.

**6.** Verfahren nach einem der vorhergehenden Ansprüche, umfassend einen Schritt des Abschließens der Austrocknungsprozedur, wenn der geschätzte elektrische Widerstand (RWt) des Isoliermaterials (210M) mindestens so groß wie der Mindestschwellenwert ($RW_{min}$) ist.

**7.** Verfahren nach einem der vorhergehenden Ansprüche, umfassend die folgenden anfänglichen Schritte

- Aktivieren einer Datenerfassungseinrichtung (11), die dazu ausgelegt ist, Klimaparameter ($\varphi t$, $T_{air}$, $T_{surface}$) aufzuzeichnen; und
- Aufzeichnen eines anfänglichen Werts des elektrischen Widerstands ($RW_0$) des Isoliermaterials (210M), das in der elektrischen Maschine (21) eingesetzt ist;

wobei anfängliche Schritte nach Abschluss der Montage der elektrischen Maschine (21) durchgeführt werden.

**8.** Verfahren nach dem vorhergehenden Anspruch, umfassend einen weiteren anfänglichen Schritt des Löschens eines Austrocknungsflags.

**9.** Verfahren nach einem der vorhergehenden Ansprüche, wobei die Klimaparameter ($\varphi_t$, $T_{air}$, $T_{surface}$) während eines beliebigen nachfolgenden Betriebsmodus ($M_{ongrid}$, $M_{offgrid}$, $M_{dryout}$) der Windturbine (2) bewertet werden.

**10.** Verfahren nach einem der vorhergehenden Ansprüche, wobei eine Austrocknungsprozedur während eines On-Grid-Betriebsmodus ($M_{ongrid}$) durchgeführt wird.

**11.** Verfahren nach einem der vorhergehenden Ansprüche, wobei die gemessenen Klimaparameter relative Luftfeuchtigkeit ($\varphi_t$) und/oder Lufttemperatur ($T_{air}$) und/oder Oberflächentemperatur umfassen.

**12.** Windturbine (2), umfassend eine elektrische Maschine (21), in der eine Menge an Isoliermaterial (210M) eingesetzt ist; und eine Überwachungsanordnung (1), die dazu konfiguriert ist, das Verfahren nach einem der Ansprüche 1 bis 11 durchzuführen, wobei die Überwachungsanordnung (1) Folgendes umfasst:

- eine Sensoranordnung (10), die dazu konfiguriert ist, einen oder mehrere Klimaparameter ($\varphi_t$, $T_{air}$, $T_{surface}$) in einem Innenraum ($2_{int}$) der Windturbine (2) zu messen;
- ein Datenanalysemodul (12), das dazu konfiguriert ist, den elektrischen Widerstand (RWt) des Isoliermaterials (210M) auf der Grundlage von Klimaparametern ($\varphi_t$, $T_{air}$, $T_{surface}$), die durch die Sensoranordnung (10) gemessen werden, zu schätzen; und
- ein Austrocknungs-Bewertungsmodul (13), das dazu konfiguriert ist, die Notwendigkeit einer Austrocknungsprozedur auf der Grundlage des geschätzten Widerstands (RWt) zu bewerten.

**13.** Windturbine nach dem vorhergehenden Anspruch, wobei die elektrische Maschine (21) der Generator der Windturbine (2) ist und das Isoliermaterial (210M) um die Generatorwicklungen (210W) eingesetzt ist.

**14.** Windturbine nach Anspruch 12 oder Anspruch 13, umfassend eine Datenerfassungseinrichtung (11), die dazu ausgelegt ist, die durch die Sensoranordnung (10) gemessenen Klimaparameter ($\varphi_t$, $T_{air}$, $T_{surface}$) aufzuzeichnen und zu bewerten.

**15.** Computerprogrammprodukt, das ein Computerprogramm umfasst, das direkt in einen Speicher einer Überwachungsanordnung (1) einer Windturbine (2) nach einem der Ansprüche 12 bis 14 ladbar ist und das Programmelemente zum Durchführen von Schritten des Verfahrens nach einem der Ansprüche 1 bis 11 umfasst, wenn das Computerprogramm durch die Überwachungsanordnung (1) ausgeführt wird.

**Revendications**

**1.** Procédé de commande d'une éolienne (2), lequel procédé comprend les étapes suivantes

- la mesure d'un ou plusieurs paramètres climatiques ($\phi_t$, $T_{air}$, $T_{surface}$) dans un intérieur ($2_{int}$) de l'éolienne (2) ;
- l'estimation, sur la base des paramètres climatiques ($\phi t$, $T_{air}$, $T_{surface}$), de la résistance électrique (RWt) d'un matériau isolant (210M) déployé dans un composant électrique (21) de l'éolienne (2) ;
- l'évaluation de la nécessité d'une procédure de dessèchement sur la base de la résistance estimée (RWt).

2. Procédé selon la revendication précédente, dans lequel l'étape d'estimation de la résistance électrique (RWt) du matériau isolant (210M) est basée sur une valeur de seuil d'humidité prédéterminée ($k_1$) pour ce matériau (210M).

3. Procédé selon l'une quelconque des revendications précédentes, dans lequel la résistance électrique (RWt) du matériau isolant (210M) est estimée sur la base d'une relation précédemment établie entre un paramètre climatique ($\phi t$, $T_{air}$, $T_{surface}$) et la résistance électrique de ce matériau (210M).

4. Procédé selon l'une quelconque des revendications précédentes, comprenant une étape d'évaluation de la progression de la résistance électrique estimée (RWt) pour détecter une augmentation ou une diminution de la résistance électrique.

5. Procédé selon l'une quelconque des revendications précédentes, comprenant une étape d'initiation d'une procédure de séchage lorsque la résistance électrique estimée (RW) du matériau isolant (210M) ne dépasse plus une valeur seuil minimale ($RW_{min}$).

6. Procédé selon l'une quelconque des revendications précédentes, comprenant une étape de conclusion de la procédure de séchage lorsque la résistance électrique estimée (RWt) du matériau isolant (210M) est au moins aussi grande que la valeur seuil minimale ($RW_{min}$).

7. Procédé selon l'une quelconque des revendications précédentes, comprenant les étapes initiales suivantes

- l'activation d'un moyen d'enregistrement de données (11) adapté pour enregistrer des paramètres climatiques ($\phi t$, $T_{air}$, $T_{surface}$) ; et
- l'enregistrement d'une valeur initiale de résistance électrique ($RW_0$) du matériau isolant (210M) déployé dans la machine électrique (21) ;

lesquelles étapes initiales sont effectuées une fois l'assemblage de la machine électrique terminé (21).

8. Procédé selon la revendication précédente, comprenant une étape initiale supplémentaire de dégagement d'un drapeau de séchage.

9. Procédé selon l'une quelconque des revendications précédentes, dans lequel les paramètres climatiques ($\phi_t$, $T_{air}$, $T_{surface}$) sont évalués pendant tout mode de fonctionnement ultérieur ($M_{ongrid}$, $M_{offgrid}$, $M_{dryout}$) de l'éolienne (2).

10. Procédé selon l'une quelconque des revendications précédentes, dans lequel une procédure de séchage est effectuée pendant un mode de fonctionnement sur grille ($M_{ongrid}$).

11. Procédé selon l'une quelconque des revendications précédentes, dans lequel les paramètres climatiques mesurés comprennent l'humidité relative ($\phi_t$) et/ou la température de l'air ($T_{air}$) et/ou la température de surface.

12. Éolienne (2) comprenant une machine électrique (21) dans laquelle une quantité de matériau isolant (210M) est déployée ; et un agencement de surveillance (1) configuré pour réaliser le procédé selon l'une quelconque des revendications 1 à 11, l'agencement de surveillance (1) comprenant

- un agencement de capteurs (10) configuré pour mesurer un ou plusieurs paramètres climatiques ($\phi_t$, $T_{air}$, $T_{surface}$) dans un intérieur ($2_{int}$) de l'éolienne (2) ;
- un module d'analyse de données (12) configuré pour estimer la résistance électrique (RWt) du matériau isolant (210M) sur la base de paramètres climatiques ($\phi_t$, $T_{air}$, $T_{surface}$) mesurés par l'agencement de capteurs (10) ; et
- un module d'évaluation de séchage (13) configuré pour évaluer la nécessité d'une procédure de séchage sur la base de la résistance estimée (RWt).

13. Éolienne selon la revendication précédente, dans laquelle la machine électrique (21) est le générateur de l'éolienne (2), et le matériau isolant (210M) est déployé autour des enroulements de générateur (210W).

**14.** Éolienne selon la revendication 12 ou la revendication 13, comprenant un moyen d'enregistrement de données (11) adapté pour enregistrer et évaluer les paramètres climatiques ($\phi_t$, $T_{air}$, $T_{surface}$) mesurés par le dispositif de capteurs (10).

**15.** Produit de programme informatique comprenant un programme informatique qui peut être directement chargé dans une mémoire d'un agencement de surveillance (1) d'une éolienne (2) selon l'une quelconque des revendications 12 à 14, et qui comprend des éléments de programme pour réaliser des étapes du procédé selon l'une quelconque des revendications 1 à 11 lorsque le programme informatique est exécuté par l'agencement de surveillance (1).

# FIG 1

$\phi_t, T_{air}, T_{surface}$

2

2int

10

21

1

11

24

22

# FIG 2

# FIG 3

$\phi_t, T_{air}, T_{surface}$

$\triangle RW$

$RW_t$

$RW_t \geq RW_{min}$

YES

NO

FIG 4

FIG 5

## FIG 6

P [W]

Moff_grid | Mon_grid

Mdry_out

$P_{exp}$

$t_0$   $t_{RW\_OK}$   t [h]

## FIG 7

P [W]

Moff_grid | Mon_grid

$P_{exp}$

$t_{on} = t_{RW\_OK}$   t [h]

## FIG 8
(Prior Art)

P [W]

Moff_grid | Mon_grid

$D_{dry}$

$P_{exp}$

$t_{on}$   $t_{dry}$   t [h]

FIG 9

210
210M

210
210M

210
210M

210P

**EP 4 448 960 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101724895 B1